# EUROPÄISCHE PATENTANMELDUNG

(11) **EP 0 930 690 A2**
(43) Veröffentlichungstag der Anmeldung: **21.07.1999**
(21) Anmeldenummer: 99100713.9
(22) Anmeldetag: 15.01.1999
(51) Int. Cl.: H02J 9/06

(54) **Getaktete Stromversorgung**

(30) Priorität: 16.01.1998 DE 19801499
(71) Anmelder: SIEMENS AKTIENGESELLSCHAFT, 80333 München (DE)
(72) Erfinder: Feldtkeller, Martin, 81543 München (DE)

(57) **Zusammenfassung**

Stromversorgung zur Versorgung eines Hauptstromkreises bei Normalbetrieb und eines Hilfsstromkreises bei Stand-By-Betrieb mit:
einem geschalteten Leistungswandler, der zwischen eine Eingangsspannung und dem Hauptstromkreis geschaltet ist und der eine Drossel, einen steuerbaren Schalter, eine erste Gleichrichteinheit sowie eine Steuereinheit für den Schalter aufweist, und
einer zweiten Gleichrichteinheit zur Einkopplung der über der Drossel abfallenden Spannung in den Hilfsstromkreis, wobei im Stand-by-Betrieb die Steuereinheit den Schalter derart steuert, daß der geschaltete Leistungswandler in Resonanzmodus betrieben wird.

## Beschreibung

Die Erfindung betrifft eine Stromversorgung zur Versorgung eines Hauptstromkreises bei Normalbetrieb und eines Hilfsstromkreises bei Stand-By-Betrieb.

Moderne elektronische Geräte wie z.B. PC-, Fax- oder TV-Geräte weisen heute üblicherweise eine Stand-By- oder Bereitschaftsfunktion auf. Bei einem TV-Gerät im Stand-By-Zustand ist das Gerät "ausgeschaltet" und kann beispielsweise über eine Fernbedienung wieder in den Normalbetrieb geschaltet werden. Bei einem Fax-Gerät ist das Gerät in Empfangsbereitschaft und wird beispielsweise durch ein ankommendes Faxsignal eingeschaltet. Die unterschiedlichen Gerätezustände "Stand-By-Betrieb" oder "Normalbetrieb" benötigen daher häufig gesonderte Anforderungen an die Stromversorgung. Im Stand-By-Betrieb soll die Stromaufnahme möglichst gering sein. Insbesondere sollen dabei nur solche Gerätefunktionen versorgt werden, die für eine schnelle Einsatzbereitschaft notwendig und die für die Erkennung eines Startsignals wie z.B. das Infrarotsignal einer Fernbedienung oder das Empfangssignal eines Faxmodems erforderlich sind. Für zukünftige PC-Geräte, die über ein Local Area Network (LAN) ein- und ausgeschaltet werden sollten, muß die Hilfsstromversorgung zudem einen hohen Wirkungsgrad haben. Unter Berücksichtigung eines möglichst hohen Wirkungsgrades für die Betriebszustände eines Gerätes, wird die Stromversorgung heute üblicherweise derart realisiert, daß eine Hauptstromversorgung für die Nominal-/Maximal-Last und eine zusätzliche Hilfsstronversorgung für die Minimal-Last wie sie beispielsweise im Stand-By-Betrieb eines PC-Gerätes erforderlich ist, vorgesehen wird.

Aus technologisch/wirtschaftlichen Erwägungen und zur Erfüllung anstehender nationaler und internationaler Normen und Regelungen enthalten die Hauptstromversorgungen zukünftig neben dem bekannten, auf Basis von Pulsweitenmodulation arbeitenden DC-DC-Wandler für die Hauptstromversorgung des Gerätes häufig auch einen weiteren AC-DC-Wandler, einen sogenannten PFC-Wandler (PFC = Power-Factor-Correction). Der PFC-Wandler dient der vorgeschriebenen verbesserung des Leistungsfaktors, während der klassische Pulsweitenmodulationswandler die Transformation und Netztrennung vornimmt. Der Leistungsfaktor ist definiert als das Verhältnis zwischen aufgenommener Wirkleistung und aufgenommener Scheinleistung. Idealerweise ist der Leistungsfaktor gleich 1. In diesem Fall gibt es keine Blindleistung. Typischerweise wird der PFC-Wandler aus Kostengründen und aufgrund seines hohen Wirkungsgrades als Hochsetzsteller ausgeführt. Alternativ kann der PFC-Wandler beispielsweise auch als Sperrwandler ausgeführt sein.

Es wäre nun vorteilhaft, bei ausgeschaltetem Gerät bzw. Pulsweitenmodulationswandler den PFC-Wandler als Stromversorgung für den Stand-By-Betrieb einzusetzen und damit eine separate Hilfsstromversorgung einzusparen. Derartige Stromversorgungen eines Schaltnetzteiles sind beispielsweise aus "Power-Factor-Controller TDA 4815/19 verbessert Leistungsfaktor von Schaltnetzteilen" von Werner Schott, in Siemens Components 31 (1993), Heft 2, Seiten 46 bis 50 angegeben. Weiterhin sind Stromversorgungen der in Rede stehenden Art beispielsweise in den Datenblättern zum Baustein TK 84 819 der Firma Toko, zum Baustein LT 1509 der Firma Linear Technology und zum Baustein ML 4824 der Firma Microlinear beschrieben. Nachteilig dabei ist jedoch, daß zum Betrieb des PFC-Wandlers eine Grundlast erforderlich ist, die umso größer sein muß, je höher die Eingangsspannung und der Ausgangsstrom sind. Damit wird nur ein sehr ungünstiger Wirkungsgrad erzielt.

Aufgabe der Erfindung ist es daher, eine Stromversorgung zur Versorgung eines Hauptstromkreises bei Normalbetrieb und eines Hilfsstromkreises bei Stand-By-Betrieb anzugeben, die beim Stand-By-Betrieb einen höheren Wirkungsgrad erzielt.

Diese Aufgabe wird durch eine Stromversorgung gemäß Patentanspruch 1 gelöst. Ausgestaltungen und Weiterbildungen des Erfindungsgedankens sind Gegenstand von Unteransprüchen.

Die erfindungsgemäße Stromversorgung umfaßt insbesondere einen getakteten Leistungswandler, der zwischen eine Eingangsspannung und dem Hauptstromkreis geschaltet ist und der eine Drossel, einen steuerbaren Schalter, eine erste Gleichrichtereinheit sowie eine Steuereinheit für den Schalter aufweist. Darüber hinaus ist eine zweite Gleichrichtereinheit zur Einkopplung der über der Drossel abfallenden Spannung in den Hilfsstromkreis vorgesehen, wobei im Stand-By-Betrieb die Steuereinheit den Schalter derart steuert, daß der getaktete Leistungswandler im Resonanzmodus betrieben wird. Durch Resonanzbetrieb werden die Schaltverluste des getakteten Leistungswandlers minimiert. Damit wird aber auch insgesamt der Wirkungsgrad der Stromversorgung im Stand-By-Betrieb wesentlich heraufgesetzt.

Zur Erzielung des Resonanzmodus wird bevorzugt im Stand-By-Betrieb der Schalter durch die Steuereinheit nur dann eingeschaltet, wenn aufgrund von Ausschwingvorgängen vorangegangener Schaltvorgänge die Spannung am Schalter gleich null ist. Bei Verwendung eines Hochsetzschaltreglers PFC ist zudem notwendig, daß die Ausgangsspannung des Hochsetzschaltreglers mindestens doppelt so hoch ist wie seine Eingangsspannung. Erfindungsgemäß wird deshalb zur Hilfstromversorgung der Hochsetzschaltregler im Resonanzmodus entsprechend dem Verlauf der netzseitig anliegenden Sinushalbwellen nur in Zeitabschnitten betrieben, in denen der Momentanwert der Eingangsspannung kleiner als die Ausgangnennspannung des Hochsetzschaltreglers ist. Ist die Eingangsspannung höher als die Hälfte der Nennausgangsspannung des Leistungswandlers, dann wird der Schalter nicht eingeschaltet.

Die Erfindung weiterbildend ist zwischen Drossel und zweiter Gleichrichteinheit ein Kondensator geschaltet. Bei kapazitiver Ankopplung der zweiten Gleichrichteinheit läßt sich aufgrund der hohen Betriebsfrequenz im Resonanzmodus eine relativ hohe Leistung übertragen, so daß ein Burst-Betrieb möglich wird. Ein Gleichrichtkondensator in der zweiten Gleichrichteinheit speichert genügend Energie für die Pausen zwischen den Burst-Impulsen. Die Burst-Impulse erfolgen am günstigsten zu den Zeitpunkten, an denen der Momentanwert der Eingangsspannung ungefähr halb so hoch wie die Ausgangsgleichspannung des Leistungswandlers ist. In dieser Betriebsart erfolgt keine Leistungsübertragung an den Ausgang des Leistungswandlers und damit an den Hauptstromkreis, so daß - wenn überhaupt- nur eine minimale Grundlast erforderlich ist.

Die Regelung der Ausgangsspannung an der zweiten Gleichrichteinheit kann dabei beispielsweise durch Modulation der Breite der Burst-Impulse erfolgen. Damit wird mit geringen Mitteln eine Regelung der Versorgungsspannung im Hilfsstromkreis erzielt.

Die Spannung über der Drossel wird bevorzugt mittels einer mit der Drossel induktiv gekoppelten Hilfswicklung abgenommen. Damit ist eine optimale Impedanzanpassung des Hilfsstromkreises an die Drossel möglich.

Bevorzugt wird der Leistungswandler im Stand-By-Betrieb mit einer Frequenz betrieben, die im wesentlichen gleich der Resonanzfrequenz aus der Drosselinduktivität sowie der Summe aller dazu parallel liegenden Kapazitäten ist. Die Betriebsfrequenzen für Normalbetrieb und Stand-By-Betrieb können dabei gleich sein oder aber auch voneinander abweichen.

Die Erfindung wird nachfolgend anhand des in den Figuren der Zeichnung dargestellten Ausführungsbeispiels näher erläutert. Es zeigt:
- Figur 1: das Schaltbild einer Ausführungsform einer erfindungsgemäßen Stromversorgung und
- Figur 2: den Verlauf ausgewählter Signale bei der Stromversorgung nach Figur 1.

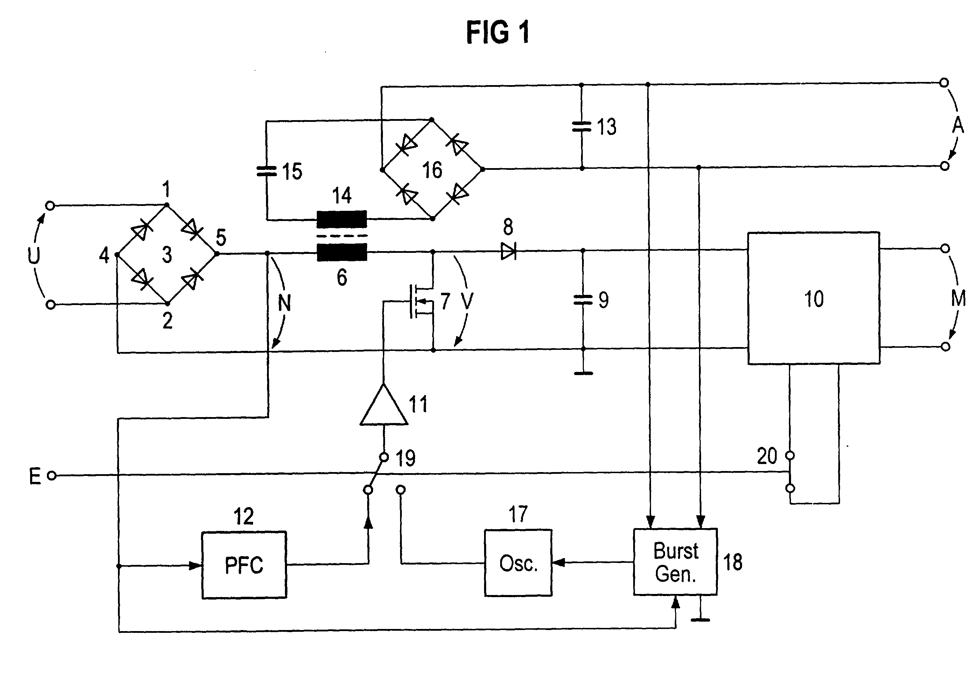

Bei dem Ausführungsbeispiel gemäß Figur 1 wird eine sinusförmige Netzspannung U an die beiden Eingangsknoten 1 und 2 eines Brückengleichrichters 3 angelegt, an dessen Ausgangsknoten 4 und 5 dementsprechend eine pulsierende Gleichspannung N abnehmbar ist. An den Ausgangsknotenpunkt 5 ist ein Anschluß einer Drossel 6 angeschlossen, deren anderer Anschluß mit dem Drainanschluß eines MOS-Feldeffekttransistors 7 vom n-Kanal-Typ sowie mit einem Anschluß einer Diode 8 verbunden ist. Der Sourceanschluß des MOS-Feldeffekttransistors 7, der als gesteuerter Schalter dient, ist ebenso wie ein Anschluß eines Glättungskondensators 9 mit dem Ausgangsknoten 4 des Brükkengleichrichters 3 verschaltet. Der andere Anschluß des Glättungskondensators 9 ist mit dem anderen Anschluß der Diode 8 gekoppelt. Die über dem Glättungskondensator 9 abfallende Spannung dient zur Versorgung eines Hauptstromkreises mit einem dem Glättungskondensator 9 nachgeschalteten Schaltnetzteils 10, an dessen Ausgang eine Spannung M zur Versorgung weiterer nicht näher dargestellter Schaltungsteile des Hauptstromkreises anliegt. Die Ansteuerung des MOS-Feldeffekttransistors 7 erfolgt gateseitig mittels einer Treiberschaltung 11, die ihrerseits durch eine PFC-Steuerschaltung 12 angesteuert wird. Der Eingang der PFC-Steuerschaltung 12 ist mit dem Ausgangs knotenpunkt 5 des Brückengleichrichters 3 verbunden. Die PFC-Steuerschaltung 12 wirkt in Verbindung mit der Drossel 6, dem MOS-Feldeffekttransistor 7, der Diode 8 sowie dem Glättungskondensator 9 als Hochsetzsteller in bekannter Weise und dient als aktives Oberschwingungsfilter für das nachgeschaltete, Schaltnetzteil 10.

Ein in der Zeichnung nicht dargestellter Hilfsstromkreis wird durch eine über einem Glättungskondensator 13 abfallende Spannung A gespeist. Die Spannung A wird dabei mittels einer induktiv an die Drossel 6 angekoppelten Hilfswicklung 14 und eines über einen Koppelkondensator 15 dieser Hilfswicklung 14 nachgeschalteten Brückengleichrichters 10, dem seinerseits der Glättungskondensator 13 nachgeschaltet ist, erzeugt.

Im Stand-By-Betrieb erfolgt die Steuerung des Schalters 7 mittels eines Oszillators 17, der seinerseits durch einen Burst-Generator 18 gesteuert wird. Die Burst-Signale des Burst-Generators 18 zur Steuerung des Oszillators 17 werden dabei in Abhängigkeit von der Spannung A sowie der Ausgangsspannung N am Gleichrichter 3 erzeugt. Zur Umschaltung der beiden Betriebsarten ist ein Umschalter 19 vorgesehen, mittels dem der Eingang der Treiberschaltung 11 in Abhängigkeit von einem Steuersignal E wahlweise auf den Ausgang der PFC-Steuerschaltung 12 und den Ausgang des Oszillators 17 aufschaltbar ist. Darüber hinaus ist mit dem Steuersignal E mittels eines Schalters 20 das Schaltnetzteil 10 im Stand-By-Betrieb abschaltbar.

Die Schaltverluste sind bei der erfindungsgemäßen Stromversorgung im Stand-By-Betrieb deshalb am geringsten, da der Eingangsteil im Resonanzmodus betrieben wird. Dies wird beispielsweise dadurch erreicht, daß nur zu Zeitpunkten eingeschaltet wird, bei denen aufgrund von Ausschwingvorgängen vorangegangener Schaltvorgänge die Spannung am Schalter 7 gleich 0 ist. Voraussetzung dafür ist im Fall eines PFC-Reglers wie z.B. einem Hochsetzschaltreglers, daß die Ausgangsspannung mindestens doppelt so hoch ist wie die Eingangsspannung. Erfindungsgemäß wird deshalb der PFC-Regler als Hilfsstromversorgung im Resonanzmodus im Verlauf der netzseitig anliegenden Sinushalbwellen nur in Zeitabschnitten betrieben, in denen der Momentanwert der Eingangsspannung kleiner als die Ausgangsgleichspannung des PFC-Reglers ist. Darüber hinaus läßt sich bei kapazitiver Ankopplung der Hilfswicklung 14 an den Gleichrichter 16 bei einer hohen Betriebsfrequenz im Resonanzmodus eine relativ hohe Leistung übertragen, so daß nur Burst-Betrieb notwendig ist. Der Glättungskondensator 13 speichert dabei genügend Energie für die Pausen zwischen den Burst-Impulsen. Die Burst-Impulse erfolgen dabei am günstigsten zu den Zeitpunkten, an denen der Momentanwert der Eingangsspannung ungefähr halb so hoch ist wie die Ausgangsgleichsspannung des PFC-Reglers. In diesem Fall erfolgt keine Leistungsübertragung an den Glättungskondensator 9 am Ausgang des PFC-Reglers, so daß -wenn überhaupt- nur eine minimale Grundlast erforderlich ist. Die Regelung der Ausgangsspannung der Hilfsstromversorgung kann beispielsweise durch Modulation der Breite der Burst-Impulse erfolgen.

Im Stand-By-Betrieb arbeitet der PFC-Regler also auf einer Frequenz, die näherungsweise gleich der Resonanzfrequenz aus Drosselinduktivität und den relevanten Kapazitäten wie beispielsweise Streukapazität der Drossel, Sperrschichtkapazität des Schalters und des Gleichrichters 16 ist. Dabei arbeitet der PFC-Regler abhängig vom Momentanwert der Netzspannung nicht, wenn diese signifikant höher als die Hälfte der Nennausgleichsspannung des PFC-Reglers ist. Im Stand-By-Betrieb schaltet der Oszillator 17 den Schalter 7 dann ein, wenn die Schalterspannung ein Minimum erreicht. Weiterhin schaltet der Burst-Generator 18 den Oszillator 17 abhängig von der Netzspannung und abhängig von der Hilfsausgangsspannung A ein und aus.

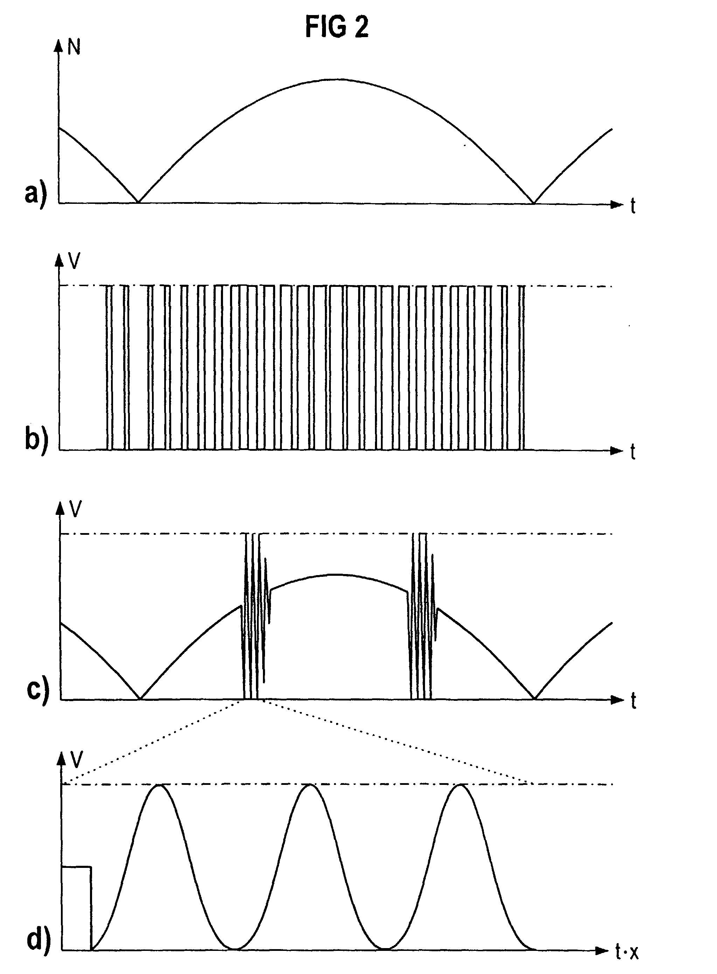

In Figur 2 unter a) ist die pulsierende Gleichspannung N über der Zeit aufgetragen, wobei die Spannung N zwischen den Ausgangsanschlüssen 4 und 5 des Gleichrichters 3 abgreifbar ist und infolgedessen durch Gleichrichtung aus der Netzspannung U hervorgeht. Im Normalbetrieb wird daraus durch die PFC-Steuerschaltung 12 der Schalter 7 derart angesteuert, daß sich ein der pulsierenden Gleichspannung N entsprechendes pulsweitenmoduliertes Rechtecksignal über dem Schalter 7 einstellt. Der Verlauf der Spannung V über dem Schalter 7 in Abhängigkeit von der Zeit t ist in Figur 2 unter b) dargestellt. Weiterhin ist unter c) in Figur 2 die Spannung V über dem Schalter 7 im Stand-By-Betrieb gezeigt. Bei Erreichen bestimmter Spannungswerte der Spannung N, beispielsweise bei der Hälfte des Spitzenwertes der Spannung N, werden jeweils für eine bestimmte Zeitdauer Burst-Impulse mittels des Schalters 7 erzeugt. Die Ansteuerung erfolgt dabei mittels des Oszillators 17 und des vorausgehenden Burst-Generators 18. Die Burst-Impulse bestehen dabei aus einer hochfrequenten beispielsweise sinusförmigen Schwingungsfolge für die Dauer des Burst-Impulses. In Figur 2 ist unter d) die Schwingungsfolge eines Burst-Impulses zeitlich um das x-fache gedehnt gezeigt.

## Patentansprüche

1. Stromversorgung zur Versorgung eines Hauptstromkreises bei Normalbetrieb und eines Hilfsstromkreises bei Stand-By-Betrieb mit:
einem geschalteten Leistungswandler, der zwischen eine Eingangsspannung und dem Hauptstromkreis geschaltet ist und der eine Drossel (6), einen steuerbaren Schalter (7), eine erste Gleichrichteinheit (8) sowie eine Steuereinheit (11, 12, 17, 18, 19) für den Schalter aufweist, und
einer zweiten Gleichrichteinheit (16) zur Einkopplung der über der Drossel (6) abfallenden Spannung in den Hilfsstromkreis,
wobei im Stand-by-Betrieb die Steuereinheit (11, 12, 17, 18, 19) den Schalter (7) derart steuert, daß der geschaltete Leistungswandler in Resonanzmodus betrieben wird.

2. Stromversorgung nach Anspruch 1, bei der im Stand-By-Betrieb die Steuereinheit (11, 12, 17, 18, 19) den Schalter (7) nur dann einschaltet, wenn die Spannung am Schalter näherungsweise Null ist.

3. Stromversorgung nach Anspruch 1 oder 2, bei der zwischen Drossel (6) und zweiter Gleichrichteinheit (16) ein Kondensator (15) geschaltet ist.

4. Stromversorgung nach einem der vorherigen Ansprüche, bei der die Spannung über der Drossel (6) mittels einer mit der Drossel (6) induktiv gekoppelten Hilfswicklung (14) abgenommen wird.

5. Stromversorgung nach einem der vorherigen Ansprüche, bei der der Leistungswandler im Stand-By-Betrieb mit einer Frequenz betrieben wird, die im wesentlichen gleich der Resonanzfrequenz aus Drosselinduktivität und der Summe aller dazu parallel liegenden Kapazitäten ist.

6. Stromversorgung nach einem der vorherigen Ansprüche, bei der im Stand-By-Betrieb der Schalter (7) durch die Steuereinheit (11, 12, 17, 18, 19) nicht eingeschaltet wird, wenn die Eingangsspannung höher ist als die Hälfte der Nennausgangsspannung des Leistungswandlers.

7. Stromversorgung nach einem der vorherigen Ansprüche, bei der der geschaltete Leistungswandler ein Hochsetzsteller ist.

8. Stromversorgung nach einem der vorherigen Ansprüche, bei der im Stand-By-Betrieb der Schalter (7) durch die Steuereinheit in Form einer Folge von kurzzeitigen Impulsen eingeschaltet wird.

9. Stromversorgung nach Anspruch 8, bei der die Folgen von Impulsen zu Zeitpunkten erfolgen, an denen der Momentanwert der Eingangsspannung im wesentlichen halb so groß ist wie die Spannung am Hilfsstromkreis.

10. Stromversorgung nach Anspruch 8 oder 9, bei der die Steuereinrichtung die Anzahl der Impulse innerhalb einer Folge in Abhängigkeit von der Spannung am Hilfsstromkreis regelt.
